# EUROPÄISCHE PATENTSCHRIFT

(11) **EP 1 261 247 B1**
(45) Veröffentlichungstag und Bekanntmachung des Hinweises auf die Patenterteilung: **27.08.2003**
(21) Anmeldenummer: 01916895.4
(22) Anmeldetag: 28.02.2001
(51) Int. Cl.: A01D 41/14

(54) **VORRICHTUNG ZUR BODENKOPIERUNG FÜR VORSATZGERÄTE AN ERNTEMASCHINEN**
GROUND-SURFACE ADAPTATION DEVICE FOR ATTACHMENTS ON HARVESTING MACHINES
DISPOSITIF D'ADAPTATION A LA SURFACE DU SOL DESTINE AUX ACCESSOIRES DE RECOLTEUSES

(30) Priorität: 09.03.2000 DE 10011498
(43) Veröffentlichungstag der Anmeldung: 04.12.2002
(73) Patentinhaber: Case Harvesting Systems GmbH, 01844 Neustadt (DE)
(72) Erfinder: VON ALLWÖRDEN, Wilhelm, 01326 Dresden (DE); MENDE, Ingo, 01277 Dresden (DE); SCHOLTKE, Henri, 02692 Obergurig (DE); SPAIDA, Peter, 02736 Oppach (DE); WINDISCH, Gerhard, 01877 Bischofswerda (DE)
(74) Vertreter: Müller, Lutz
(86) Internationale Anmeldenummer: DE0100784
(87) Internationale Veröffentlichungsnummer: WO01065917

(56) Entgegenhaltungen:
- EP-A- 0 198 544
- EP-A- 0 331 893
- EP-A- 0 511 768
- WO-A-81/01938
- BE-A- 773 297
- DE-A- 1 757 007
- US-A- 5 473 870

## Beschreibung

Die Erfindung betrifft eine Vorrichtung zur Bodenkopierung für Vorsatzgeräte an Erntemaschinen, insbesondere für selbstfahrende Mähdrescher und Feldhäcksler, nach den Merkmalen im Oberbegriff des Patentanspruchs **1**.

Derartige Vorrichtungen zur Bodenkopierung dienen zur Anpassung der Vorsatzgeräte an Bodenunebenheiten, damit das Erntegut auch unter diesen Bedingungen verlustfrei geerntet werden kann. Dazu ist es hinlänglich bekannt, die Vorsatzgeräte verschwenkbar an der Erntemaschine anzubringen, so daß sie einmal um eine quer zur Fahrtrichtung ausgerichtete Achse die sogenannte Bewegung des Längskopierens und zum anderen um eine in Fahrtrichtung zeigende Achse die Bewegung des Querkopierens ausführen können. Die Anwendungsfälle von solchen Vorrichtungen zur Bodenkopierung erstrecken sich auf Schneid- bzw. Mähwerke sämtlicher Bauarten und auf Aufsammelvorrichtungen an den verschiedensten Erntemaschinentypen. Sie sind deshalb so notwendig geworden, weil alle diese Vorsatzgeräte durch die sehr große Leistungsfähigkeit der heutigen Erntemaschinen eine dementsprechend große Arbeitsbreite haben müssen. Im Stand der Technik ist hierfür bereits eine Vielzahl von Ausführungsvarianten bekannt geworden, die man in zwei große Kategorien einteilen kann.

Die erste Kategorie ist in der EP 0 331 893 B 1 beschrieben, bei der das Vorsatzgerät frontseitig und zum Zwecke des Längs- und Querkopierens schwenkbeweglich an der Erntemaschine befestigt ist. Zwei voneinander beabstandete und symmetrisch zur Mittellängsachse der Erntemaschine ausgerichtete Hydraulikzylinder stützen dabei das Vorsatzgerät von unten mit einer solchen Kraft ab, daß es nur mit einem Restgewicht und demzufolge mit einem geringen Druck auf dem Boden aufliegt, um über Schleifschuhe, Laufräder oder durch deren Bodenwanne selbst den Bodenunebenheiten zum Längskopieren folgen zu können. Zur Einhaltung eines Sollwertes für den Bodendruck wird entweder mittels geeigneter Sensoren der Druck in den Hydraulikzylindern oder die Abstützkraft der Hydraulikzylinder am Fahrgestell der Emtemaschine überwacht. Im Falle des Abweichens von diesem Sollwert werden die Kolbenstangen der Hydraulikzylinder so weit ein- oder ausgefahren, bis der Sollwert wieder anliegt, was mit einem Anheben bzw. Absenken des Vorsatzgerätes verbunden ist. Für das Querkopieren ist das Vorsatzgerät in seinen äußeren Seitenbereichen mit federelastischen Gleitbügeln ausgestattet, die den Boden abtasten und über ein mit ihnen verbundenes Potentiometer ein Abstandsmaß des Vorsatzgerätes zum Boden liefern. Wenn sich die Signale beider Seiten unterscheiden, werden zwei weitere Hydraulikzylinder mit Druck beaufschlagt, die in einer vertikalen Ausrichtung zwischen beispielsweise dem Zuführschacht eines Mähdreschers und dem Vorsatzgerät angebracht sind, die das Vorsatzgerät solange seitlich verschwenken, bis auf beiden Seiten des Vorsatzgerätes das gleiche Abstandsmaß wieder hergestellt ist.

An dieser Vorrichtung zur Bodenkopierung ist einerseits zu bemängeln, daß sie aufgrund ständig fließenden Hydrauliköls in einer beträchtlichen Menge viel zu träge reagiert. Andererseits liefert sie das Regelsignal zum Längskopieren zu spät. Weiterhin ist von Nachteil, daß durch die Bodenabtastung unter verschiedenen Witterungsbedingungen, durch sich ständig ändernde Hebelverhältnisse sowie Hystereseerscheinungen im Hubsystem und unter dem Einfluß stark - schwankender dynamischer Kräfte praktisch keine reproduzierbaren Sollwerte für den Bodendruck verwirklicht werden können. Die Folge davon ist, daß Hindernissen nicht ausgewichen werden kann und die Funktionsfähigkeit schon ab mittleren Fahrgeschwindigkeiten in Frage gestellt ist.

Die zweite Kategorie von Vorrichtungen zur Bodenkopierung, wovon eine Ausführungsvariante in der EP 0 748 153 B1 beschrieben ist, arbeitet neben der in der ersten Kategorie vorgestellten Möglichkeit über den direkten Bodenkontakt des Vorsatzgerätes nun hauptsächlich ohne diesen. Dazu sind beidseitig im Bereich seiner Seitenwände Ultraschallsensoren angebracht, die kontinuierlich das Abstandsmaß des Vorsatzgerätes zum Boden messen und ein dementsprechendes Ausgangssignal erzeugen. Im Fahrerhaus dieser Erntemaschine ist ein Regelgerät installiert, das die Ausgangssignale der Ültraschallsensoren empfängt und im Falle einer Abweichung von einem vorgegebenen Soll-Abstandsmaß ein Regelventil im Hydraulikkreislauf der Hydraulikzylinder zum Anheben und Absenken des Vorsatzgerätes beaufschlagt. Da die Hydraulikzylinder analog wie bei vorstehend beschriebener Lösung angeordnet sind und ebenso betätigt werden, arbeitet dieses System genauso träge und zu ungenau bezüglich der Einhaltung des Soll-Abstandsmaßes zwischen dem Vorsatzgerät und dem Boden. Einen zusätzlichen Störfaktor stellen die Ultraschallsensoren dar, weil sie nicht zwischen auf dem Boden liegenden Pflanzen bzw. Stoppeln und dem Boden unterscheiden können, so daß sie bei diesen Bedingungen falsche Abstandsmaße liefern. Durch ihre Anordnung kurz über dem Boden macht sich dieser Fehler natürlich besonders negativ bemerkbar. Außerdem reagieren Ultraschallsensoren auf Wind und Feuchtigkeit mit einer großen Streuung der Meßwerte. Darüber hinaus sind sie relativ teuer in der Anschaffung, so daß alle diese Nachteile zusammengenommen sicher der Grund dafür sind, daß sich eine derartige Vorrichtung zur Bodenkopierung bis heute in der Praxis nicht durchsetzen konnte. Ausgehend von den negativen Erkenntnissen aus vorstehend beschriebener Lösung ist eine weitere Vorrichtung zur Bodenkopierung mit der EP 0 511 768 B 1 und der EP 0 936 475 A1 bekannt geworden, wo die dort eingesetzten Ultraschallsensoren weit über dem Boden und im Seitenbereich der Vorsatzgeräte angebracht sind. Damit wird lediglich erreicht, daß der Meßfehler für das Abstandsmaß durch Stoppeln bzw. auf dem Boden liegende Pflanzen prozentual etwas verringert wird.

Eine weitere Möglichkeit einer Vorrichtung zur Bodenkopierung mittels Ultraschallsensoren ist in der EP 0 765 594 A1 am Beispiel eines Mähdrescherschneidwerkes beschrieben. Dort messen die Ultraschallsensoren kontinuierlich den Abstand zu den außen am Schneidwerk angebrachten Tastkufen mit Hilfe einer daran befestigten Platte, um die Fehler aus der Bodenabtastung auszuschließen. Diese Maßnahme allein ist jedoch für eine gut funktionierende Bodenkopierung nicht ausreichend. Außerdem ändert sich der Aufireff- und Abstrahlwinkel zur Platte ständig, so daß Verfälschungen für das Abstandsmaß auftreten.

Analog zu bewerten ist die Bodenkopierung nach der DE 196 01 420 A1, wo ein vorgespanntes Gleitelement aus schmalem Federstahl den Boden abtastet und seine Bewegung infolge von Bodenunebenheiten auf ein Signalübertragungsglied überträgt. Dieses ist als parallelogrammartiges Gestänge ausgebildet, an dem auch eine Platte befestigt ist, die im Unterschied zur vorstehend beschriebenen Platte an der Tastkufe annähernd parallele Bewegungen ausführt. Sie wird von einem Wellensensor angestrahlt und reflektiert dessen Strahlung. Der Wellensensor ermittelt daraus ein Maß für die Lageveränderung des Gleitelements, das in einem direkt proportionalen Verhältnis zum Abstandsmaß des Vorsatzgerätes vom Boden steht. Dieses so ermittelte Maß mit einer etwas größeren Genauigkeit wird aber letztendlich auch nur zur Ansteuerung eines Regelventils im Hydraulikkreis für die Hydraulikzylinder zum Anheben und Absenken des Vorsatzgerätes benutzt, so daß alle bisher genannten Nachteile auch mit dieser Bodenkopierung nicht beseitigt werden konnten. Einen zusätzlichen Mangel verursachen die schmalen Gleitelemente beim Vorhandensein von Längsrillen im Boden, weil sie dann ein falsches Abstandsmaß signalisieren.

Schließlich ist mit der WO-A-81 01938 eine weitere Lösung zum Längskopieren eines Vorsatzgerätes bekannt geworden, dessen vorderes Teil um eine quer zur Fahrtrichtung der Erntemaschine ausgerichtete Achse an dessen hinterem Teil schwenkbweglich aufgehängt ist. Das hintere Teil ist starr an der durch Hydraulikzylinder höhenverschwenkbaren Zuführeinrichtung befestigt. In einer ersten einfachen Ausführungsvariante wird das vordere Teil mit hydraulischen oder mechanischen Federbeinen am hinteren Teil gewichtsentlastend abgestützt, wobei dessen Gleitkufen ständig Bodenkontakt haben. Mit dem Erreichen definierter oberer und unterer Grenzstellungen der Federbeine erzeugen Fühler ein entsprechendes Signal, worauf die Hydraulikzylinder die Zuführeinrichtung ein Stück anheben oder absenken. Ein solches frei schwingendes System ist nicht in der Lage, schnell und mit einer hinreichenden Genauigkeit auf Bodenunebenheiten zu reagieren. Ein Bodenkopieren ohne Bodenkontakt ist damit völlig ausgeschlossem.

Deshalb wurde hierzu eine zweite Ausführungsvariante vorgeschlagen, wo das vordere Teil des Vorsatzgerätes in einem bestimmten Abstandsmaß über dem Boden gehalten wird. Die Federbeine sind dabei durch hydraulische Arbeitszylinder ersetzt worden und das Abstandsmaß wird von am vorderen Teil schwenkbeweglich angebrachten Tastfingern verfolgt. An den hydraulischen Arbeitszylindern und der Schwenkwelle der Tastfinger sind auch hier Fühler zum Signalisieren oberer und unterer Grenzwerte vorgesehen, bei deren Erreichen die Hydraulikzylinder der Zuführeinrichtung betätigt werden. Auch an dieser Ausführungsvariante ist noch zu bemängeln, daß sie nicht in der Lage ist, ein vorgegebenes Abstandsmaß ständig exakt einzuhalten, da die Tastfinger erst mit Erreichen ihrer Grenzwerte Veränderung herbeiführen.

Deshalb liegt der Erfindung die Aufgabe zugrunde, eine Vorrichtung zur Bodenkopierung für Vorsatzgeräte an Erntemaschinen zu schaffen, die schnell und auch bei höheren Fahrgeschwindigkeiten auf Bodenunebenheiten reagiert, die mit großer Genauigkeit das als Sollwert vorgegebene Abstandsmaß des Vorsatzgerätes vom Boden einhält und die kostengünstig herstellbar ist.

Diese Aufgabe wird gemäß der Erfindung durch die Merkmale des 1. Patentanspruches gelöst, wobei in den Unteransprüche Merkmale aufgeführt sind, die diese Lösung in vorteilhafter Weise weiterentwickeln.

Durch die höhenverschwenkbare Anbringung der Zuführeinrichtung an der Erntemaschine mittels leistungsstarker Hydraulikzylinder ist es möglich, diese gemeinsam mit dem an deren Frontseite angebrachten Vorsatzgerät um einen relativ großen Bereich zu verschwenken, was vordergründig zum Einstellen der Ausgangsposition des Vorsatzgerätes zum bestimmungsgemäßen Einsatz und zum Ausheben in eine Transportstellung genutzt wird. Aufgrund der Größe dieser Hydraulikzylinder und des damit verbundenen Hydraulikölflusses großer Menge dauert diese Bewegung ziemlich lange. Deshalb ist das Vorsatzgerät zum Zwecke des Längskopierens auf dem Boden an der Zuführeinrichtung um eine quer zur Fahrtrichtung der Erntemaschine ausgerichtete Achse schwenkbeweglich angebracht, so daß es sich gegenüber der dabei feststehenden Zuführeinrichtung ständig um einen definierten Schwenkwinkel bewegen kann. Zur Überwachung des definierten Bereichs für den Schwenkwinkel ist an der Zuführeinrichtung ein Sensor lagefixiert angeordnet, der mit dem Vorsatzgerät im Kontakt steht. Zur zwangsweisen Bewegung des Vorsatzgerätes innerhalb des definierten Bereichs ist zwischen ihm und der Zuführeinrichtung ein relativ kleiner und dadurch schnell reagierender hydraulischer Arbeitszylinder vorgesehen.

Am Vorsatzgerät befindet sich wenigstens ein weiterer Sensor, der ständig das Abstandsmaß des Vorsatzgerätes vom Boden mißt. Beide Sensoren liefern elektrische Signale, die einem Regler zugeführt werden, der auf das Hydrauliksystem der Hydraulikzylinder unter der Zuführeinrichtung und auf das des hydraulischen Arbeitszylinders zwischen der Zuführeinrichtung und dem Vorsatzgerät Einfluß nehmen kann.

Eine zweckmäßige Ausgestaltung der erfindungsgemäßen Vorrichtung zur Bodenkopierung besteht darin, daß das Abstandsmaß des Vorsatzgerätes vom Boden von auf dem Boden gleitenden und gegenüber dem Vorsatzgerät höhenbeweglichen Tastern ermittelt wird, die ihre Höhenbewegung proportional auf sogenannte Winkelsensoren zur Erzeugung einer dementsprechenden Ausgangsspannung übertragen. Im Falle der Anwendung eines Schneidwerkes als Vorsatzgerät bietet es sich an, als Taster gleich die sich im Bereich der Seitenwände deutlich vor dem Messerbalken befindenden Halmteiler zu nutzen.

In einer weiteren vorteilhaften Ausgestaltung der Erfindung hat es sich bewährt, das Vorsatzgerät an der Zuführeinrichtung zusätzlich um eine in Fahrtrichtung der Erntemaschine zeigende Achse zum Zwecke. des Querkopierens verschwenkbar anzuhängen. Ein dementsprechend zwischen der Zuführeinrichtung und dem Vorsatzgerät angeordneter weiterer Hydraulikzylinder steht ebenfalls mit dem Regler in Verbindung, der zu dessen Betätigung die Signale der Sensoren zum Messen des Abstandsmaßes verwertet.

Die Funktionsweise der Vorrichtung zur Bodenkopierung beginnt damit, daß an einem sich in der Fahrerkabine der Erntemaschine befindenden Bedienteil eine Vorauswahl der Einsatzmöglichkeit des Vorsatzgerätes vorgenommen wird, indem die Taste "Bodenkopierung" gedrückt wird. Damit ist der als Softwareregler ausgebildete Regler zur Ausführung der notwendigen Steuer- und Rechenoperationen zum Bodenkopieren aktiviert. Dann wird ein Sollwertgeber auf das gewünschte Soll- Abstandsmaß des Vorsatzgerätes vom Boden eingestellt, das über dessen Eingangsleitung dem Regler vermittelt wird. Auch die das Ist- Abstandsmaß des Vorsatzgerätes zum Boden laufend messenden Sensoren in den Halmteilern links und rechts liefern ihre Werte ebenso wie der Sensor zur Überwachung des definierten Bereichs für den Schwenkwinkel über separate Eingangsleitungen an den Regler.

Solange sich das Vorsatzgerät in der Transportstellung bzw. auf dem Wege zu seiner Ausgangsposition für den Feldeinsatz befindet, sind beide Ist- Abstandsmaße größer als das Soll- Abstandsmaß und der Regler senkt die Zuführeinrichtung gemeinsam mit dem Vorsatzgerät in Richtung Boden ab. Vorher oder gleichzeitig stellt er über den hydraulischen Arbeitszylinder das Vorsatzgerät auf den Mittelwert des definierten Bereichs für den Schwenkwinkel, dessen Erreichen durch den Sensor zwischen der Zuführeinrichtung und dem Vorsatzgerät signalisiert wird. Damit das Vorsatzgerät beim Längskopieren allen durch-schnittlich großen Bodenerhebungen bzw. -senken innerhalb des definierten Bereichs für den Schwenkwinkel folgen kann, hat es sich übrigens als zweckmäßig erwiesen, für diesen etwa 10 Grad Bewegungsfreiheit zuzulassen. Die Ausgangsposition des Vorsatzgerätes für den Feldeinsatz ist dann erreicht, wenn beide Ist- Abstandsmaße selbst bzw. das vom Regler errechnete durchschnittliche Ist- Abstandsmaß mit dem Soll- Abstandsmaß übereinstimmen und die Hydraulikzylinder die Absenkbewegung der Zuführeinrichtung daraufhin einstellen.

Das Längskopieren im Feldeinsatz über durchschnittlich große Bodenerhebungen bzw. -senken wird allein vom hydraulischen Arbeitszylinder ausgeführt, solange sich der Schwenkwinkel innerhalb seines definierten Bereiches befindet. Dazu vergleicht der Regler die durchschnittlichen Ist- Abstandsmaße des Vorsatzgerätes vom Boden mit dem Soll- Abstandsmaß und regelt entsprechend der Größe der Abweichung den hydraulischen Arbeitszylinder auf eine Länge zur sofortigen Nachregulierung auf das Soll- Abstandsmaß. Trifft das Vorsatzgerät auf überdurchschnittlich große Bodenerhebungen bzw. -senken, erreicht der Schwenkwinkel die obere oder untere Grenze des definierten Bereichs. Das meldet der Sensor zur Überwachung des Schwenkwinkels dem Regler, der daraufhin die Zuführeinrichtung über deren Hydraulikzylinder so weit hebt oder senkt, bis sich der Schwenkwinkel wieder innerhalb seines definierten Bereichs befindet. Gleichzeitig sorgt der hydraulische Arbeitszylinder über die Steuersignale des Reglers gleichermaßen für die Einhaltung des Soll- Abstandsmaßes. In einer erweiterten Ausführungsvariante der Erfindung wird die Längskopierung mit einer gleichzeitigen Querkopierung vorteilhaft verbunden, indem der Regler aus der Differenz der Ist- Abstandsmaße ein Steuersignal an den Hydraulikzylinder sendet, der das Vorsatzgerät um eine in Fahrtrichtung der Erntemaschine zeigende Achse verschwenkt.

Zusammenfassend stellen sich die Vorteile der Erfindung so dar, daß hiermit eine sehr schnelle Bodenkopierung für das Vorsatzgerät einer Erntemaschine möglich geworden ist, was sich insbesondere bei höheren Fahrgeschwindigkeiten der Erntemaschine vorteilhaft auswirkt. Durch die ständige Erfassung der Ist- Abstandsmaße des Vorsatzgerätes vom Boden und deren Vergleichen mit dem Soll- Abstandsmaß durch den als Softwareregler ausgebildeten Regler und dessen sofortige Einflußnahme bei Abweichungen durch eine sinnvolle Betätigung des hydraulischen Arbeitszylinders und der Hydraulikzylinder an der Zuführeinrichtung folgt das Vorsatzgerät exakt der Bodenkontur. Schließlich sind für diese Vorrichtung zur Bodenkopierung nur einfache und bisher an der Erntemaschine bereits vorhandene Bauteile nötig, so daß sich deren Herstellungskosten in Grenzen halten.

Die Erfindung soll nun anhand eines Ausführungsbeispieles näher erläutert werden, wobei die einzelnen Figuren zeigen:
- Fig. 1:: eine Seitenansicht auf das Vorderteil eines schematisch dargestellten Mähdreschers mit Zuführschacht und Schneidwerk
- Fig. 2:: einen vergrößerter Ausschnitt vom Unterteil des Schwenkrahmens aus Fig. 1
- Fig. 3:: ein elektrisch/hydraulisches Schaltbild der Vorrichtung zur Bodenkopierung

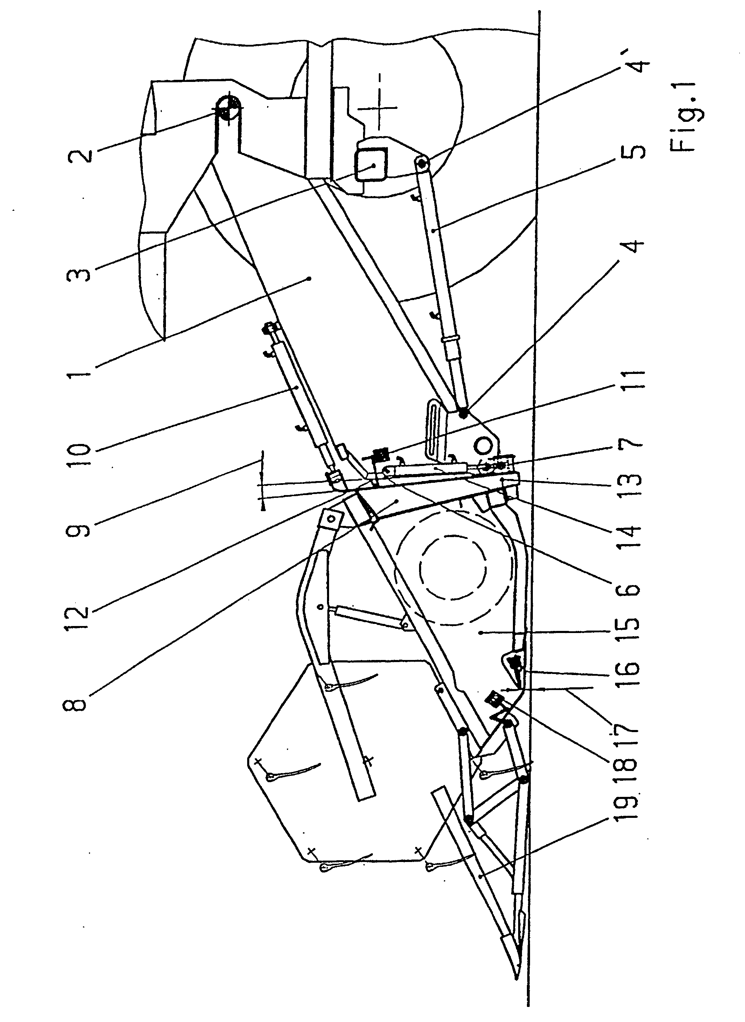

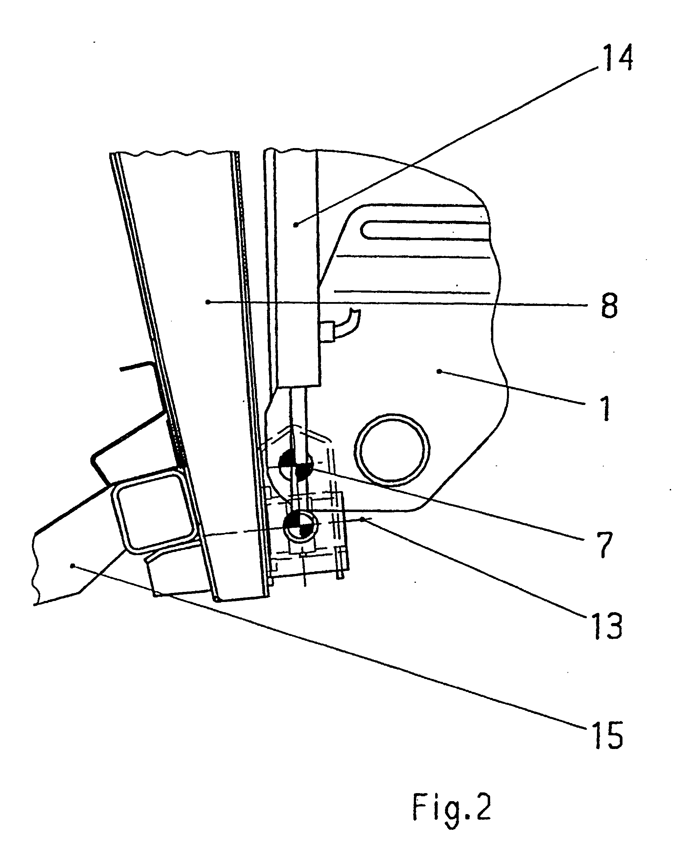

In den Figuren 1 und 2 ist die Vorrichtung zur Bodenkopierung beispielhaft an einem Mähdrescher verwirklicht, der als Zufuhreinrichtung 1 für das Dreschgut einen Zuführschacht aufweist, der um seine obere Schachtwelle 2 höhenverschwenkbar am Fahrgestell 3 befestigt ist. Dazu befinden sich zwischen dem Fahrgestell 3 und der Unterseite des Zuführschachtes zwei beidseitig in Gelenken 4;4' angreifende Hydraulikzylinder 5. Frontseitig ist der Zuführschacht mit einem Verstärkungsrahmen 6 ausgestattet, an dessen Unterseite sich eine quer zur Fahrtrichtung des Mähdreschers ausgerichtete Achse 7 befindet. Um diese Achse 7 ist ein Schwenkrahmen 8 gegenüber dem Verstärkungsrahmen 6 um einen definierten Schwenkwinkel 9 verdrehbeweglich angeordnet. Ein einenends mit der Oberseite des Zuführschachtes und anderenends mit dem Schwenkrahmen 8 gelenkig verbundener hydraulischer Arbeitszylinder 10 stellt zwischen ihnen die abstandsveränderliche Verbindung her. Ein seitlich am Zuführschacht befestigter Sensor 11 erfaßt mit seinem am Schwenkrahmen 8 anliegenden Tastarm 12 ständig die Größe des Schwenkwinkels 9.

Außerdem ist der Schwenkrahmen 8 gegenüber dem Verstärkungsrahmen 6 um eine in Fahrtrichtung des Mähdreschers zeigende Achse 13 verdrehbeweglich aufgehängt, wofür zwischen dem Zuführschacht und dem Schwenkrahmen 8 auf deren in Fahrtrichtung gesehenen linken Seite ein vertikal stehender Hydraulikzylinder 14 gelenkig angeordnet ist.

Der Schwenkrahmen 8 ist dabei so gestaltet, daß er ein Vorsatzgerät 15 für die Erntemaschine schnell aufnehmen und auch wieder entweder auf dem Boden oder einem Transportwagen absetzen kann, was in diesem Ausführungsbeispiel ein Schneidwerk ist. Dessen Messerbalken 16 weist beim Bodenkopieren ein Abstandsmaß 17 zum Boden auf, das auf beiden Seiten des Vorsatzgerätes 15 mit je einem Sensor 18 ständig gemessen wird. Die als Winkelsensoren ausgebildeten Sensoren 18 sind dazu mit den höhenbeweglichen und auf dem Boden gleitenden Halmteilern 19 des Vorsatzgerätes 15 so gekoppelt, daß deren Höhenbewegung proportional auf die Schwenkbewegung der Sensoren 18 übertragbar ist.

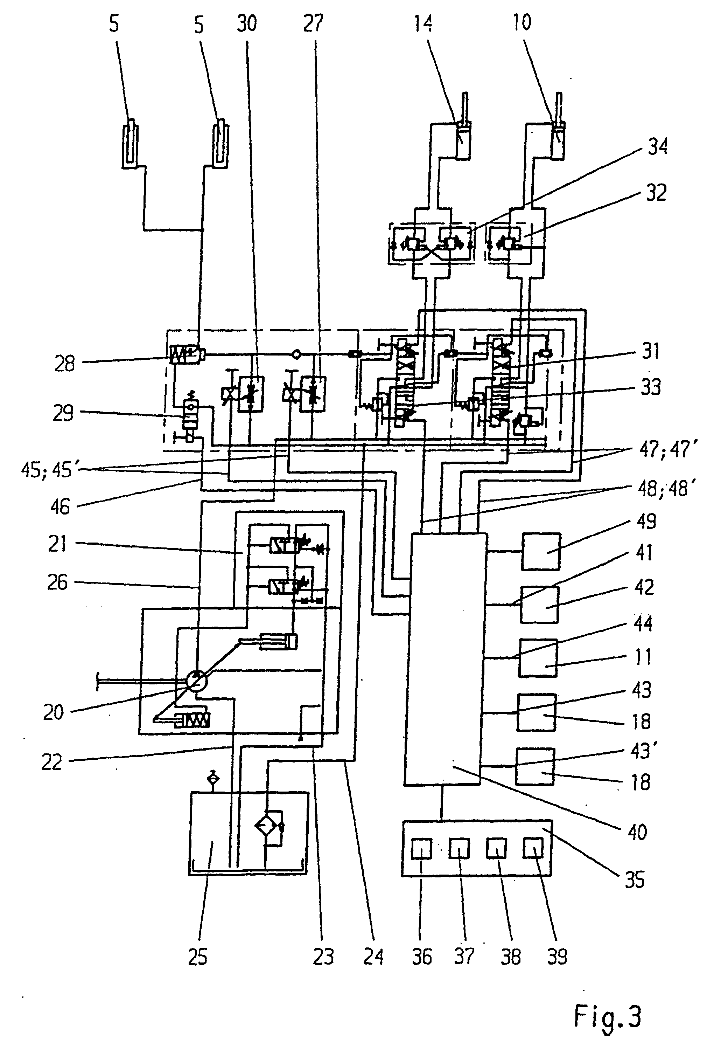

Das elektrisch/hydraulische Schaltbild nach Figur 3 vermittelt eine Übersicht zu sämtlichen für die Bodenkopierung notwendigen Steuer- und Bedienelementen sowie über deren schaltungstechnisches Zusammenwirken. Die Erntemaschine ist dazu an geeigneter Stelle mit einer hydraulischen Verstellpumpe 20 ausgerüstet, die mit einer hydraulischen Stelleinrichtung 21 in Verbindung steht. Deren Saugleitung 22 und die Leckölleitung 23 sowie die Rücklaufleitung 24 des gesamten Hydrauliksystems enden gemeinsam im Hydraulikölbehälter 25. Ihre Druckleitung 26 ist einmal über einen Stromregler- Heben 27 und ein Logikelement 28 mit den Hydraulikzylindern 5 unter dem Zuführschacht verbunden. Andererseits besteht zwischen den Hydraulikzylindern 5 und der Rücklaufleitung 24 eine Verbindung über das Logikelement 28 und ein elektrisches Sperrventil 29 sowie einen Stromregler- Senken 30.

Zum anderen ist die Druckleitung 26 noch über ein 4/3-Wege-Proportionalventil 31 und ein einfaches Senkbremsventil 32 mit dem hydraulischen Arbeitszylinder 10 zum Längskopieren verbunden und weiterhin über ein anderes 4/3-Wege-Proportionalventil 33 und ein doppeltes Senkbremsventil 34 mit dem Hydraulikzylinder 14 zum Querkopieren.

Zum elektrischen Teil der Bodenkopierung gehört ein Bedienteil 35 zur Vorauswahl der Einsatzmöglichkeiten des Vorsatzgerätes 15, wofür eine Taste 36 zur manuellen Steuerung, eine Taste 37 für den Hochschnitt, eine Taste 38 für die Auflagedruckregelung und schließlich eine Taste 39 für die Bodenkopierung des Vorsatzgerätes 15 zur Verfügung stehen. Das Bedienteil 35 steht mit einem Regler 40 in Verbindung, der zur Ausführung der Steuer- und Rechenoperationen als Softwareregler ausgebildet ist. Er bekommt über eine Eingangsleitung 41 von einem Sollwertgeber 42 die Vorgabe eines Soll- Abstandsmaßes 17 für das Vorsatzgerät 15 zum Boden, über die Eingangsleitungen 43;43' die Ist- Abstandsmaße 17 von den Sensoren 18 und über die Eingangsleitung 44 vom Sensor 11 die Istwerte für den Schwenkwinkel 9. Zur Ausgabe seiner Steuersignale besitzt er zum Stromregler- Heben 27 und zum Stromregler- Senken 30 führende Ausgangsleitungen 45;45' für die Hydraulikzylinder 5, eine Ausgangsleitung 46 zum elektrischen Sperrventil 29, Ausgangsleitungen 47;47' zum 4/3-Wege-Proportionalventil 31 für den hydraulischen Arbeitszylinder 10 und Ausgangsleitungen 48;48' zum 4/3-Wege-Proportionalventil 33 für den Hydraulikzylinder 14.

Außerdem ist der Regler 40 mit einem Fahrhebel 49 verbunden, von dem er für den Fall der manuellen Steuerung des Vorsatzgerätes 15 die Steuersignale erhält.

## Patentansprüche

1. Vorrichtung zur Bodenkopierung für Vorsatzgeräte an Erntemaschinen, insbesondere für selbstfahrende Mähdrescher und Feldhäcksler, mit:
◆ einer durch Hydraulikzylinder (5) höhenverschwenkbaren Zuführeinrichtung (1), die frontseitig eine horizontal und quer zur Fahrtrichtung der Erntemaschine ausgerichtete Achse (5) aufweist, an der das Vorsatzgerät (15) mittels eines hydraulischen Arbeitszylinders (10) um einen definierten Schwenkwinkel (9) gegenüber der Zuführeinrichtung (1) schwenkbeweglich angebracht ist,
◆ einem den definierten Bereich des Schwenkwinkels (9) überwachenden Sensor (11), der über einen Regler (40) mit den Hydrauliksystemen des Hydraulikzylinders (5) und des hydraulischen Arbeitszylinders (10) verbunden ist,
◆ am Vorsatzgerät (15) befestigten und dessen Abstandsmaß (17) zum Boden feststellenden Sensoren (18), die über den Regler (40) wenigstens mit dem Hydrauliksystem der Hydraulikzylinder (5) für die Zuführeinrichtung (1) in Verbindung stehen,
**dadurch, gekennzeichnet, daß**
a) der Regler (40) als Softwareregler ausgebildet ist, der wenigstens mit den Eingangsleitungen (41;43;43';44) eines Sollwertgebers (42) für ein Soll- Abstandsmaß (17) des Vorsatzgerätes (15) zum Boden, der das Ist- Abstandsmaß (17) laufend messenden Sensoren (18) und für den Sensor (11) zur Überwachung des definierten Bereichs des Schwenkwinkels (9) verbunden ist und daß er wenigstens Ausgangsleitungen (45;45';47;47';48;48') zu den Hydraulikzylindern (5) der Zufiihreinrichtung (1), zum hydraulischen Arbeitszylinder (10) zwischen der Zuführeinrichtung (1) und dem Vorsatzgerät (15) und zum das Vorsatzgerät (15) um eine in Fahrtrichtung zeigende Achse (13) verschwenkenden Hydraulikzylinder (14) aufweist.
b) der Regler (40) mit einem Bedienteil (35) zur Vorauswahl der Einsatzmöglichkeiten des Vorsatzgerätes (15) verbunden ist, das wenigstens über eine Taste (36) zur manuellen Steuerung, eine Taste (37) zum Hochschnitt, eine Taste (38) zur Auflagedruckregelung und eine Taste (39) zur Bodenkopierung verfügt.

2. Vorrichtung nach Anspruch 1, **dadurch gekennzeichnet, daß** zur Einstellung der Ausgangsposition des Vorsatzgerätes (15) zum Bodenkopieren das Signal des den definierten Bereich des Schwenkwinkels (9) überwachenden Sensors (11) das Steuersignal für den hydraulischen Arbeitszylinder (10) zur Nachregelung auf einen Mittelwert des Schwenkwinkels (9) ist und daß das vom Regler (40) errechnete durchschnittliche Ist-Abstandsmaß (17) des Vorsatzgerätes (15) zum Boden aus den Ist-Abstandsmaßen (17) der Sensoren (18) das Steuersignal für die Hydraulikzylinder (5) der Zuführeinrichtung (1) zur Einstellung auf das Soll-Abstandsmaß (17) ist.

3. Vorrichtung nach Anspruch 1, **dadurch gekennzeichnet, daß** das vom Regler (40) errechnete durchschnittliche Ist-Abstandsmaß (17) des Vorsatzgerätes (15) vom Boden aus den Ist-Abstandsmaßen (17) der Sensoren (18) das Steuersignal für den hydraulischen Arbeitszylinder (10) zur Nachregelung auf das Soll-Abstandsmaß (17) ist, solange sich der Schwenkwinkel (9) im definierten Bereich befindet.

4. Vorrichtung nach Anspruch 1, **dadurch gekennzeichnet, daß** das Signal des den definierten Bereich des Schwenkwinkels (9) überwachenden Sensors (11) im Falle des Erreichens bzw. Überschreitens seines oberen oder unteren Grenzwertes das Steuersignal für die Hydraulikzylinder (5) der Zuführeinrichtung (1) zur Nachregelung in den definierten Bereich hinein bei gleich-zeitiger Einhaltung des Soll-Abstandsmaßes (17) für das Vorsatzgerät (15) vom Boden ist.

5. Vorrichtung nach einem oder mehreren der vorstehenden Ansprüche, **dadurch gekennzeichnet, daß** der Regler (40) mit einem Fahrhebel (49) zur manuellen Steuerung des Vorsatzgerätes (15) verbunden ist.

6. Vorrichtung nach den Ansprüchen 1 bis 5, **dadurch gekennzeichnet, daß** der definierte Bereich für den Schwenkwinkel (9) zwischen dem Vorsatzgerät (15) und der Zuführeinrichtung (1) in der Größenordnung von 10 Grad liegt.

7. Vorrichtung nach einem oder mehreren der vorstehenden Ansprüche, **dadurch gekennzeichnet, daß** zwischen dem Vorsatzgerät (15) und der Zuführeinrichtung (1) ein das Vorsatzgerät (15) um eine in Fahrtrichtung zeigende Achse (13) vierschwenkender Hydraulikzylinder (14) angeordnet ist, dessen Hydrauliksystem über den Regler (40) mit den das Abstandsmaß (17) des Vorsatzgerätes (15) zum Boden messenden Sensoren (18) verbunden ist.

8. Vorrichtung nach Anspruch 7, **dadurch gekennzeichnet, daß** die Differenz aus den Ist-Abstandsmaßen (17) des Vorsatzgerätes (15) zum Boden das Steuersignal für den das Vorsatzgerät (15) um die in Fahrtrichtung zeigende Achse (13) verschwenkenden Hydraulikzylinder (14) ist

9. Vorrichtung nach einem oder mehreren der vorstehenden Ansprüche, **dadurch gekennzeichnet, daß** die Sensoren (18) am Vorsatzgerät (15) mit auf dem Boden gleitenden mechanischen Tastern gekoppelt sind, die gegenüber dem Vorsatzgerät (15) höhenbeweglich sind und die sich in Fahrtrichtung der Erntemaschine gesehen im Falle eines Schneidwerks weit vor dessen Messerbalken (16) und im Falle einer Aufsammelvorrichtung deutlich vor deren Aufnahmetrommel befinden.

10. Vorrichtung nach Anspruch 9, **dadurch gekennzeichnet, daß** die sich im Bereich der Seitenwände des Schneidwerks vor dem Messerbalken (16) befindenden höhenbeweglichen Halmteiler (19) mit den das Abstandsmaß (17) zum Boden messenden Sensoren (18) gekoppelt sind.

11. Vorrichtung nach einem oder mehreren der vorstehenden Ansprüche, **dadurch gekennzeichnet, daß** die Sensoren (18) für das Abstandsmaß (17) und der Sensor (11) zur Überwachung des definierten Bereichs für den Schwenkwinkel (9) als Winkelsensoren ausgebildet sind.

## Claims

1. A device for ground copying for front attachments to harvesting machines, in particular for self-propelled combine harvesters and forage harvesters, with:
◆ A feeder device (1), the height of which can be varied through tilting by means of hydraulic cylinders (5), which at the front exhibits a horizontal axle (5) which runs transversely to the direction of travel of the harvesting machine, onto which the attachment (15) is fixed by means of a hydraulic working cylinder (10) for tilting the attachment (15) through a defined tilting angle (9) relative to the feeder device (1),
◆ a sensor (11) for monitoring the defined range of the angle of tilt (9), which is connected via a controller (40) with the hydraulic systems of the hydraulic cylinder (5) and of the hydraulic working cylinder (10),
◆ sensors (18) fixed to the attachment (15) for determining its distance from the ground, which are connected via the controller (40) at least with the hydraulic system of the hydraulic cylinder (5) for the feeder device (1), **characterised in that**,
a) the controller (40) is designed as a software controller, which is connected with at least the input leads (41;43;43';44)
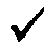 of a set-value transmitter (42) for a set distance (17) of the attachment (15) to the ground,
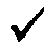 of sensors (18) which continually measure the actual distance (17) and
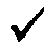 for the sensor (11) for monitoring the defined range of the angle of tilt (9)
and that it possesses at least output leads (45;45';47;47';48;48') to the hydraulic cylinders (5) of the feeder device (1), to the hydraulic working cylinder (10) between the feeder device (1) and the attachment (15) and to the hydraulic cylinders (14) which tilt the attachment (15) about an axle (13) pointing in the direction of travel.
b) The controller (40) is connected with an operating unit (35) for preselecting the options for the use of the attachment (15), which possesses at least one pushbutton (36) for manual control, one pushbutton (37) for high cutting, one pushbutton (38) for regulating the supporting pressure and one pushbutton (39) for ground copying.

2. A device in accordance with claim 1, **characterised in that**, for setting the starting position of the attachment (15) for ground copying the signal from the sensors (11) monitoring the defined range for the angle of tilt (9) is the control signal for the hydraulic working cylinder (10) for readjusting to a mean value for the angle of tilt (9) and that the mean actual distance (17) of the attachment (15) from the ground calculated by the controller (40) from the actual distances (17) from the sensors (18) is the control signal for the hydraulic cylinder (5) of the feeder device (1) for adjusting it to the set value for distance (17).

3. A device in accordance with claim 1, **characterised in that**, the mean actual distance (17) of the attachment (15) from the ground calculated by the controller (40) from the actual distances (17) of the sensors (18) is the control signal for the hydraulic working cylinder (10) for readjusting to the set distance (17), so long as the angle of tilt (9) lies within the defined range.

4. A device in accordance with claim 1, **characterised in that** the signal from the sensor (11) for monitoring the defined range of the angle of tilt (9), in the event of it attaining or exceeding its upper or lower limit, is the control signal for the hydraulic cylinder (5) of the feeder device (1) for readjustment into the defined range again with simultaneous adherence to the set distance (17) for the attachment (15) from the ground.

5. A device in accordance with one or more of the foregoing claims, **characterised in that**, the controller (40) is connected with a hand lever (49) for manual control of the attachment (15).

6. A device in accordance claims 1 to 5, **characterised in that**, the defined range for the angle of tilt (9) between the attachment (15) and the feeder device (1) lies in the order of magnitude of 10 degrees.

7. A device in accordance with one or more of the foregoing claims, **characterised in that** between the attachment (15) and the feeder device (1) a hydraulic cylinder (14) is arranged for tilting the attachment about an axis pointing in the direction of travel, the hydraulic system of which is connected via the controller (40) with the sensors (18) which measure the distance (17) of the attachment (15) to the ground.

8. A device in accordance with claim 7, **characterised in that**, the difference from the actual distances (17) of the attachment (15) to the ground is the control signal for the hydraulic cylinder (14) for tilting the attachment (15) about the axis (13) pointing in the direction of travel.

9. A device in accordance with one or more of the foregoing claims, **characterised in that**, the sensors (18) on the attachment (15) are coupled with mechanical feelers sliding on the ground, which are moveable in height relative to the attachment (15) and which in the case of a cutter are located, viewed in the direction of travel of the harvesting machine, far in front of its cutter bar (16) and in the case of a collector device are located distinctly in front of the collector drum.

10. A device in accordance with claim 9, **characterised in that** stem dividers (19), which are movable in height and are situated in the region of the side walls of the cutter in front of the cutter bar (16), are coupled with the sensors (18) for measuring the distance (17) to the ground.

11. A device in accordance with one or more of the foregoing claims, **characterised in that**, the sensors (18) for the distance (17) and the sensor (11) for monitoring the range for the angle of tilt (9) are designed as angular sensors.

## Revendications

1. Dispositif de copiage du sol pour outils adaptables sur des machines de récolte, en particulier pour des moissonneuses-batteuses et des récolteuses-hacheuses automotrices,
◆ avec un dispositif d'amenée (1), à hauteur réglable par des cylindres hydrauliques (5), qui présente, à l'avant, un axe (7) disposé horizontalement et transversalement par rapport au sens d'avancement de la machine de récolte, sur lequel l'outil adaptable (15) est monté de manière à pivoter au moyen d'un cylindre de travail hydraulique (10) selon un angle de pivotement (9) défini par rapport au dispositif d'amenée (1),
◆ avec un capteur (11) surveillant le domaine défini de l'angle de pivotement (9), capteur qui est relié par l'intermédiaire d'un régulateur (40) aux systèmes hydrauliques du cylindre hydraulique (5) et du cylindre de travail hydraulique (10),
◆ avec, fixés sur l'outil adaptable (15) et détectant leur distance (17) par rapport au sol, des capteurs (18) qui sont reliés, par l'intermédiaire du régulateur (40) au moins au système hydraulique des cylindres hydrauliques (5) pour le dispositif d'amenée (1),
◆ **caractérisé en ce que**
a) le régulateur (40) est configuré comme un régulateur logiciel qui est au moins relié aux conduites d'entrée (41; 43; 43'; 44) d'un régulateur de valeur de consigne (42) pour une mesure de distance de consigne (17) de l'outil adaptable (15) par rapport au sol, des capteurs (18) mesurant en permanence la mesure de la distance réelle (17) et pour le capteur (11) de surveillance du domaine défini de l'angle de pivotement (9), et **en ce qu'**il présente au moins des conduites de sortie (45; 45'; 47; 47'; 48; 48') pour les cylindres hydrauliques (5) du dispositif d'amenée (1), pour le cylindre de travail hydraulique (10) entre le dispositif d'amenée (1) et l'outil adaptable (15) et pour l'outil adaptable (15) des cylindres hydrauliques (14)pivotables autour d'un axe (13) orienté dans le sens du déplacement.
c) le régulateur (40) est relié avec une partie commande (35) pour la présélection des possibilités d'utilisation de l'outil adaptable (15), lequel dispose au moins d'une touche (36) pour la commande manuelle, d'une touche (37) pour la coupe en hauteur, d'une touche (38) pour la régulation de la pression d'appui et d'une touche (39) pour le copiage du sol.

2. Dispositif selon la revendication 1, **caractérisé en ce que**, pour le réglage de la position de sortie de l'outil adaptable (15) pour le copiage du sol, le signal du capteur (11) surveillant le domaine défini de l'angle de pivotement (9) est le signal de commande pour le cylindre de travail hydraulique (10) en vue de l'ajustement sur une valeur moyenne de l'angle de pivotement (9) et **en ce que** la mesure de distance réelle moyenne (17) de l'outil adaptable (15) par rapport au sol calculée par le régulateur (40) à partir des mesures de distance réelles (17) des capteurs (18) est le signal de commande pour les cylindres hydrauliques (5) du dispositif d'amenée (1) pour le réglage sur la mesure de distance de consigne (17).

3. Dispositif selon la revendication 1 **caractérisé en ce que** la mesure de distance de consigne moyenne (17) de l'outil adaptable (15) par rapport au sol calculée par le régulateur (40) à partir des mesures de distance réelles (17) des capteurs (18) est le signal de commande pour le cylindre de travail hydraulique (10) pour l'ajustement à la mesure de distance de consigne (17) aussi longtemps que l'angle de pivotement (9) se trouve dans le domaine défini.

4. Dispositif selon la revendication 1, **caractérisé en ce que** le signal du capteur (11) surveillant le domaine défini de l'angle de pivotement (9) en cas d'atteinte ou de dépassement de sa valeur limite supérieure ou inférieure est le signal de commande pour les cylindres hydrauliques (5) du dispositif d'amenée (1) pour l'ajustement dans le domaine défini avec respect simultané de la mesure de distance de consigne (17) entre l'outil adaptable (15) et le sol.

5. Dispositif selon une ou plusieurs des revendications qui précèdent, **caractérisé en ce que** le régulateur (40) est relié à un levier de conduite (49) pour la commande manuelle de l'outil adaptable (15)

6. Dispositif selon les revendications 1 à 5, **caractérisé en ce que** le domaine défini pour l'angle de pivotement (9) entre l'outil adaptable (15) et le dispositif d'amenée (1) se situe dans un ordre de grandeur de 10 degrés.

7. Dispositif selon une ou plusieurs des revendications qui précèdent, **caractérisé en ce que**, entre l'outil adaptable (15) et le dispositif d'amenée (1), un cylindre hydraulique (14) pivotant est disposé autour d'un axe (13) orienté dans le sens d'avancement, dont le système hydraulique est relié via le régulateur (40) aux capteurs (18) mesurant la mesure de distance (17) entre l'outil adaptable (15) et le sol.

8. Dispositif selon la revendication 7, **caractérisé en ce que** la différence entre les mesures de distance réelles (17) entre l'outil adaptable (15) et le sol est le signal de commande pour le cylindre hydraulique pivotant (14) l'outil adaptable (15) autour de l'axe (13) orienté dans le sens d'avancement.

9. Dispositif selon une ou plusieurs des revendications qui précèdent, **caractérisé en ce que** les capteurs (18) sur l'outil adaptable (15) sont couplés à des palpeurs mécaniques glissant sur le sol qui sont réglables en hauteur par rapport à l'outil adaptable (15) et qui, vu dans le sens d'avancement de la machine de récolte, se trouvent, dans le cas d'un dispositif de coupe, loin devant sa barre de coupe (16) et, dans le cas d'un dispositif ramasseur, nettement devant son tambour de reprise.

10. Dispositif selon la revendication 9, **caractérisé en ce que** les séparateurs (19) réglables en hauteur qui se trouvent dans la zone des parois latérales du dispositif de coupe devant la barre de coupe (16) sont couplés avec les capteurs (18) qui mesurent la distance (17) par rapport au sol.

11. Dispositif selon une ou plusieurs des revendications qui précèdent, **caractérisé en ce que** les capteurs (18) pour la mesure de distance (17) et le capteur (11) pour la surveillance du domaine défini pour l'angle de pivotement (9) ont la forme de capteurs d'angle.
